# FASCICULE DE BREVET EUROPEEN

(11) **EP 4 031 754 B1**
(45) Date de publication et mention de la délivrance du brevet: **01.11.2023**
(21) Numéro de dépôt: 20765301.5
(22) Date de dépôt: 08.09.2020
(51) Int. Cl.: F01N 3/027, F01N 3/10, F01N 9/00

(54) **PROCÉDÉ DE RÉGÉNÉRATION D'UN FILTRE À PARTICULES D'UN VÉHICULE HYBRIDE**
VERFAHREN ZUR REGENERATION EINES PARTIKELFILTERS EINES HYBRIDFAHRZEUGS
METHOD FOR REGENERATION OF A PARTICLATE FILTER OF A HYBRID VEHICLE

(30) Priorité: 20.09.2019 FR 1910371
(43) Date de publication de la demande: 27.07.2022
(73) Titulaire: Renault S.A.S., 92100 Boulogne-Billancourt (FR)
(72) Inventeur: BIBRAC, Olivia, 91220 BRETIGNY SUR ORGE (FR); TIMPERMAN, Sophie, 91590 LA FERTE ALAIS (FR)
(74) Mandataire: Renault Group
(86) Numéro de dépôt international: PCT/EP2020/075010
(87) Numéro de publication internationale: WO 2021/052806

(56) Documents cités:
- DE-A1-102016 207 667
- DE-A1-102017 101 177
- DE-A1-102017 122 892
- US-A1- 2018 156 097

## Description

La présente invention concerne, de manière générale, les filtres à particules filtrant les particules fines émises par le moteur thermique d'un véhicule hybride.

En particulier, l'invention se rapporte à un procédé de régénération d'un filtre à particules d'un véhicule hybride.

Les normes anti-pollution sont de plus en plus sévères et les particules fines émises sont maintenant réglementées non plus seulement en masse mais aussi en nombre. Or le nombre de particules fines émises par un moteur à allumage commandé, et notamment un moteur à essence, est important et le traitement de ces particules est nécessaire.

Classiquement, les particules fines s'accumulent sur le filtre à particules dont est pourvu le circuit d'échappement du véhicule. Le filtre à particules finit par se colmater et requiert d'être régénéré par combustion des particules retenues.

Dans le cas des moteurs à allumage commandé, la régénération du filtre à particules se fait automatiquement lors des phases de lever de pied du conducteur, c'est-à-dire, lorsque le conducteur retire son pied de la pédale d'accélérateur. Le moteur est maintenu embrayé, sans injection de carburant, et est alors entraîné, se comportant comme une pompe qui aspire de l'air et le renvoie dans le circuit d'échappement. De cette façon, la forte concentration en oxygène apporté vers le filtre à particules et la température suffisamment élevée entraînent la combustion rapide et efficace des particules.

Cependant, une telle régénération n'est pas possible dans le cas d'un véhicule hybride. Lors des phases de lever de pied du conducteur, le moteur thermique est débrayé, et donc non entraîné. Aucun apport d'air n'est réalisé vers le circuit d'échappement et la concentration en oxygène n'est pas suffisante pour engendrer la combustion des particules.

Il est donc nécessaire de fournir des moyens permettant d'éviter le colmatage des filtres à particules présents dans les véhicules hybrides.

Dans le cas des moteurs à allumage commandé, il est connu de basculer le fonctionnement du moteur vers un mode de fonctionnement utilisant un mélange air/carburant légèrement plus pauvre en carburant que les proportions stoechiométriques qui sont utilisées habituellement, par exemple un mélange ayant une richesse sensiblement égale à 0,95, et d'augmenter la température de manière à provoquer volontairement la combustion des particules lorsque, par exemple, la masse de particules stockées dans le filtre à particules atteint un seuil prédéterminé.

Cependant, la norme Euro 7 impose dans la pratique un mélange air/carburant stoechiométrique c'est-à-dire avec une richesse égale à 1, afin d'éviter l'émission d'une quantité d'oxyde d'azote NOx trop importante pour le respect du seuil prévu par ladite norme. L'efficacité de conversion des NOx par le catalyseur chute fortement lorsque la richesse est inférieure à 1.

La publication DE 10 2017 101177 A1 décrit un procédé de régénération d'un filtre à particules pour un véhicule hybride.

L'invention a donc pour but de remédier à ces inconvénients et de proposer un procédé de régénération d'un filtre à particules adapté à un véhicule hybride, simple, peu coûteux et sans émission excessive de NOx.

Il est donc proposé un procédé de régénération d'un filtre à particules d'un dispositif de dépollution pour véhicule hybride et apte à fonctionner selon un mode de fonctionnement électrique, thermique ou combiné, le procédé comprenant les étapes successives suivantes : la détermination d'une valeur seuil de quantité acceptable de particules fines dans le filtre à particules ; la détermination d'une valeur seuil de température du dispositif de dépollution nécessaire pour la régénération du filtre à particules par combustion des particules fines ; le calcul de la quantité de particules fines dans le filtre à particules ; la mesure de la température du dispositif de dépollution lorsque la quantité de particules fines mesurée sur le filtre à particules est supérieure ou égale à la valeur seuil de quantité acceptable prédéterminée ; la détermination du mode de fonctionnement du véhicule lorsque la température du filtre à particules mesurée est inférieure à la valeur seuil de température du dispositif de dépollution prédéterminée ; et l'enclenchement de moyens de chauffage électrique du dispositif de dépollution lorsque le mode de fonctionnement déterminé du véhicule est purement électrique, jusqu'à ce que la température du dispositif de dépollution soit supérieure ou égale à la valeur seuil prédéterminée de manière à permettre la régénération du filtre à particules, les moyens de chauffage étant coupés lorsque la régénération du filtre à particules est terminée.

De préférence, lorsque le mode de fonctionnement déterminé du véhicule est purement électrique, en outre des moyens de chauffage électrique enclenchés, le moteur électrique est configuré pour entraîner le moteur thermique en rotation, sans injection de carburant de sorte qu'un flux d'air est apporté jusqu'au filtre à particules, jusqu'à la fin de la régénération du filtre à particules.

Avantageusement, le procédé peut comprendre la détermination d'une valeur seuil de température intermédiaire du dispositif de dépollution, la valeur seuil de température intermédiaire étant inférieure à la valeur seuil de température du dispositif de dépollution prédéterminée ; et l'enclenchement du moteur thermique, avec injection de carburant, lorsque la température du dispositif de dépollution mesurée est supérieure ou égale à la valeur seuil de température intermédiaire, jusqu'à atteindre la valeur seuil de température du dispositif de dépollution prédéterminée.

De plus, la mesure de la quantité de particules fines sur le filtre à particules peut comprendre la mesure de la masse de particules fines dans le filtre à particules.

En outre, la masse de particules fines dans le filtre à particules peut être calculée à partir du débit des gaz d'échappement mesurée dans le circuit d'échappement du moteur thermique et de la pression différentielle mesurée aux bornes du filtre à particules.

Selon un mode de réalisation, le moteur thermique est un moteur à allumage commandé.

De préférence, le dispositif de dépollution comprend un catalyseur trois voies.

D'autres buts, avantages et caractéristiques ressortiront de la description qui va suivre, donnée à titre purement illustratif et faite en référence aux dessins annexés sur lesquels :
[Fig 1] illustre un dispositif de motorisation de véhicule hybride conforme à l'invention.
[Fig 2] illustre un premier mode de réalisation d'un procédé de régénération d'un filtre à particules d'un dispositif de dépollution pour véhicule hybride selon l'invention.
[Fig 3] illustre un second mode de réalisation d'un procédé de régénération d'un filtre à particules d'un dispositif de dépollution pour véhicule hybride selon l'invention.

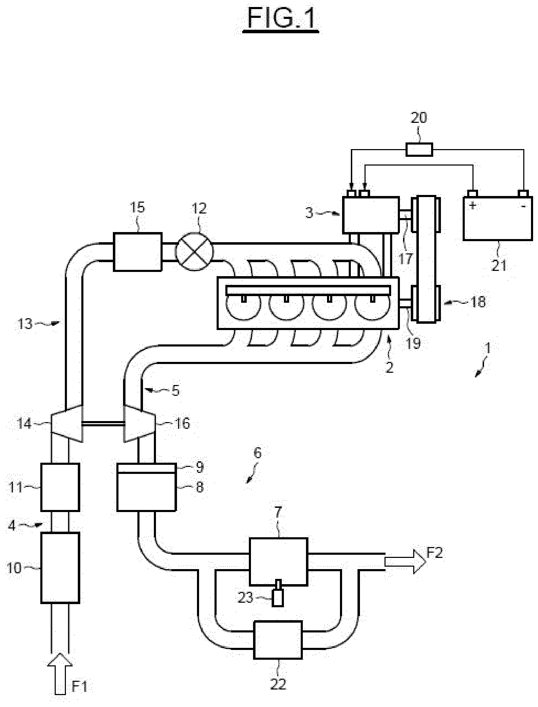

La figure 1 illustre un dispositif de motorisation 1 d'un véhicule hybride selon l'invention, comprenant un moteur thermique 2 et un moteur ou machine électrique 3. Le dispositif de motorisation 1 est apte à fonctionner selon un mode de fonctionnement électrique, thermique ou combiné.

Dans l'exemple illustré, le moteur thermique 2 est un moteur à allumage commandé, par exemple un moteur à essence, représenté ici sous la forme d'un moteur à quatre cylindres.

Pour son fonctionnement, un tel moteur thermique 2 aspire de l'air dans le sens de la flèche F1 par l'intermédiaire d'une conduite d'admission 4, et rejette ses gaz d'échappement par une conduite d'échappement 5 afin de les diriger vers un dispositif de dépollution 6. Le dispositif de dépollution 6 comprend un filtre à particules 7. Dans l'exemple illustré, compte tenu de la nature du moteur thermique, à essence, le filtre à particules 7 est avantageusement choisi comme étant un filtre à particules essence GPF (acronyme anglais pour « Gasoline Particulate Filter »).

Avantageusement, le dispositif de dépollution 6 peut comprendre en outre un catalyseur trois voies 8.

A la sortie du filtre à particules 7, les gaz d'échappement sont évacués dans l'atmosphère extérieure dans le sens de la flèche F2.

De préférence, le dispositif de motorisation 1 comprend des moyens de chauffage électrique 9 du dispositif de dépollution 6.

Le moteur consomme également du carburant, par exemple de l'essence dans le cas illustré du moteur à essence, qui est amené à ce dernier grâce à un système d'injection (non représenté).

De préférence, dans la conduite d'admission d'air 4, de manière non limitative, on peut trouver un filtre à air 10 qui permet d'éliminer les poussières contenues dans l'air, un débitmètre 11 qui permet de déterminer le débit massique d'air frais admis dans le moteur thermique 2, et un volet d'admission 12 d'air, ou boîtier-papillon 12, qui permet de réguler le débit admis dans le moteur thermique 2 en obstruant plus ou moins la conduite d'admission 4.

S'agissant, dans l'exemple de la figure 1, d'un moteur thermique suralimenté, le moteur thermique 2 comporte par ailleurs un turbocompresseur 13 dont le compresseur 14 est interposé dans la conduite d'admission 4 en amont du volet d'admission 12. De plus, il est possible qu'un échangeur de température 15 soit disposé dans la conduite d'admission 4, entre le compresseur 14 et le volet d'admission 12, de manière à refroidir l'air comprimé par le compresseur 14.

Le compresseur 14 est entraîné par la turbine 16 du turbocompresseur, qui est interposée dans la conduite d'échappement 5 entre le moteur thermique 2 et le dispositif de dépollution 6. De plus, le moteur thermique 2 peut comporter un ou plusieurs circuits de recirculation de gaz d'échappement à l'admission (non représentés), plus particulièrement un circuit dit EGR haute pression et/ou un circuit EGR basse pression (EGR : acronyme anglais pour « Exhaust Gas Recycling », ou recyclage des gaz d'échappement), sans nuire à la généralité de l'invention.

Le moteur ou machine électrique 3, par exemple un alternodémarreur 3 séparé du volant d'inertie du moteur thermique 2, et dont un arbre rotatif 17 est accouplé via des moyens de transmission 18 à un arbre rotatif 19 du moteur thermique 2, par exemple un vilebrequin, est apte à fonctionner en mode « moteur » ou en mode « générateur », sous la supervision d'un boîtier de commande 20.

En mode « génératrice », la machine électrique 3 est un alternateur qui fournit un courant électrique destiné à être stocké dans une batterie 21. En mode « moteur », elle est au contraire alimentée par du courant précédemment stocké dans la batterie 21.

Par ailleurs, le dispositif de motorisation 1 comporte des moyens de chauffage électrique 9 du dispositif de dépollution 6.

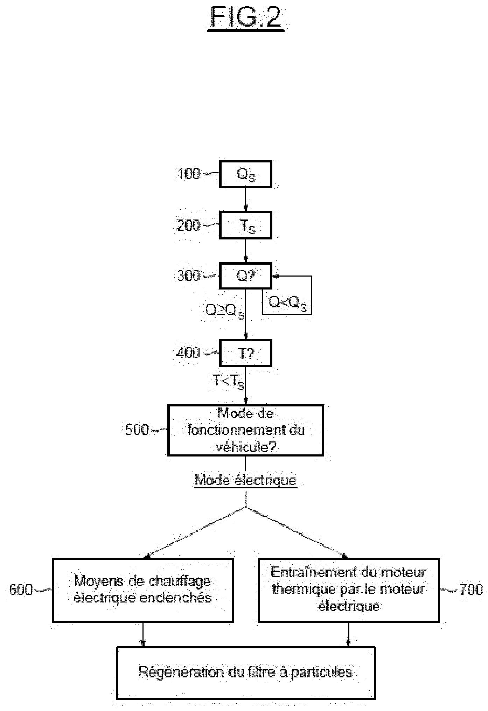

La figure 2 illustre les différentes étapes d'un procédé de régénération du filtre à particules 7 du dispositif de dépollution 6 selon un mode de réalisation de l'invention, utilisant un dispositif de motorisation 1 tel qu'il vient d'être exposé.

Le procédé débute par la détermination 100 d'une valeur seuil Qs de quantité acceptable de particules fines dans le filtre à particules 7.

Par quantité acceptable de particules fines, on entend une quantité au-delà de laquelle les propriétés de filtration du filtre à particules sont altérées et le fonctionnement du moteur thermique est dégradé, notamment à cause d'une contre-pression à l'échappement trop élevée, et pour laquelle une régénération est nécessaire.

Le procédé comprend également la détermination 200 d'une valeur seuil T_{S} de température du dispositif de dépollution 6 nécessaire pour la régénération du filtre à particules par combustion des particules fines.

La valeur seuil T_{S} correspond à la température nécessaire à la combustion des suies présentes sur le filtre à particules 7.

De préférence, la valeur seuil T_{S} est comprise entre 600 et 650°C.

Les valeurs seuil Qs et T_{S} sont ainsi prédéterminées et le procédé se poursuit par le calcul 300 de la quantité Q de particules fines dans le filtre à particules 7, à un instant t.

La mesure 300 de la quantité Q de particules fines sur le filtre à particules 7 peut comprendre la mesure de la masse de particules fines dans le filtre à particules 7.

Selon un mode de réalisation, la masse de particules fines dans le filtre à particules 7 peut être calculée à partir du débit des gaz d'échappement mesurée dans le circuit d'échappement du moteur thermique 2 et de la pression différentielle mesurée aux bornes du filtre à particules 7.

A cet égard, le dispositif de motorisation 1 illustré comprend avantageusement un capteur de pression différentielle 22.

Tant que la quantité Q calculée est inférieure à la valeur seuil Qs, aucune action n'est entreprise.

En revanche, lorsque la quantité Q de particules fines calculée dans le filtre à particules 7 est supérieure ou égale à la valeur seuil Qs de quantité acceptable préalablement déterminée, alors la température T du dispositif de dépollution 6 est mesurée dans une étape 400.

Un capteur de température 23 peut être prévu, comme cela est illustré à la figure 1, sur le filtre à particules 7.

Lorsque la température T du filtre à particules 7 mesurée est inférieure à la valeur seuil de température Ts du dispositif de dépollution 6 prédéterminée, le mode de fonctionnement du véhicule, c'est-à-dire thermique, électrique ou combiné, est déterminé selon une étape 500.

Enfin, lorsque le mode de fonctionnement déterminé du véhicule est purement électrique, le procédé se poursuit par l'enclenchement 600 des moyens de chauffage électrique 9 du dispositif de dépollution 6, et ce jusqu'à ce que la température T du dispositif de dépollution 6 soit supérieure ou égale à la valeur seuil T_{S} prédéterminée. De cette manière, la température nécessaire à la combustion des suies est atteinte et le filtre à particules 7 se régénère. Les moyens de chauffage 9 sont coupés lorsque la régénération du filtre à particules est terminée.

De préférence, lorsque le mode de fonctionnement déterminé du véhicule est purement électrique, en plus des moyens de chauffage électrique 9 enclenchés dans l'étape 600, le moteur électrique 3 est configuré pour entraîner le moteur thermique en rotation 700, en mode générateur, sans injection de carburant, de sorte qu'un flux d'air soit apporté jusqu'au filtre à particules 7, et ce jusqu'à la fin de la régénération du filtre à particules.

Avantageusement, les étapes 600 et 700 sont simultanées.

L'augmentation de la concentration en oxygène dans les gaz d'échappement qui résulte du flux d'air optimise la combustion et donc la régénération du filtre à particules 7.

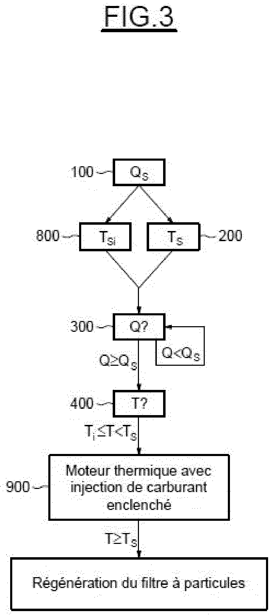

Si toutefois l'enclenchement des moyens de chauffage électrique 9 n'est pas suffisant pour atteindre la température de combustion des suies, on pourra également prévoir, selon une alternative illustrée à la figure 3, que le procédé comprenne la détermination 800 d'une valeur seuil T_{Si} de température intermédiaire du dispositif de dépollution 6. La valeur seuil de température intermédiaire T_{Si} sera choisie inférieure à la valeur seuil T_{S} de température du dispositif de dépollution 6 prédéterminée.

Lorsque la température T du dispositif de dépollution 6 mesurée est atteint la valeur seuil T_{Si} de température intermédiaire, c'est-à-dire lorsque la température T est supérieure ou égale à la valeur seuil Tsi, le moteur thermique 2 est enclenché dans une étape 900, avec injection de carburant, et ce jusqu'à atteindre la valeur seuil Ts de température du dispositif de dépollution prédéterminée.

Lorsque la valeur seuil T_{S} de température est atteinte, les conditions de température nécessaire à la combustion des suies dans le filtre à particules 7 sont atteintes et le moteur thermique 2 peut être coupé.

On pourra également prévoir que les différentes étapes du procédé soient contrôlées par un dispositif de commande, non représenté.

## Revendications

1. Procédé de régénération d'un filtre à particules (7) d'un dispositif de dépollution (6) pour véhicule hybride et apte à fonctionner selon un mode de fonctionnement électrique, thermique ou combiné, le procédé comprenant les étapes successives suivantes :
la détermination (100) d'une valeur seuil (Qs) de quantité acceptable de particules fines dans le filtre à particules (7) ;
la détermination (200) d'une valeur seuil (Ts) de température du dispositif de dépollution (6) nécessaire pour la régénération du filtre à particules (7) par combustion des particules fines ;
le calcul (300) de la quantité (Q) de particules fines dans le filtre à particules ;
la mesure (400) de la température (T) du dispositif de dépollution (6) lorsque la quantité (Q) de particules fines calculée dans le filtre à particules (7) est supérieure ou égale à la valeur seuil (Qs) de quantité acceptable prédéterminée ;
la détermination (500) du mode de fonctionnement du véhicule lorsque la température du filtre à particules (7) mesurée est inférieure à la valeur seuil (T_{S}) de température du dispositif de dépollution (6) prédéterminée ; le procédé étant **caractérisé en ce qu'**il comprend en outre
l'enclenchement (600) de moyens de chauffage électrique (9) du dispositif de dépollution (6) lorsque le mode de fonctionnement déterminé du véhicule est purement électrique, jusqu'à ce que la température du dispositif de dépollution (6) soit supérieure ou égale à la valeur seuil (T_{S}) de température prédéterminée de manière à permettre la régénération du filtre à particules, les moyens de chauffage (9) étant coupés lorsque la régénération du filtre à particules (7) est terminée.

2. Procédé de régénération selon la revendication 1, **caractérisé en ce que**, lorsque le mode de fonctionnement déterminé du véhicule est purement électrique, en outre des moyens de chauffage électrique (9) enclenchés, le moteur électrique (3) est configuré pour entraîner le moteur thermique (2) en rotation (700), sans injection de carburant de sorte qu'un flux d'air est apporté jusqu'au filtre à particules (7), jusqu'à la fin de la régénération du filtre à particules (7).

3. Procédé de régénération selon la revendication 1, **caractérisé en ce qu'**il comprend :
la détermination d'une valeur seuil (Tsi) de température intermédiaire du dispositif de dépollution (6), la valeur seuil (Tsi) de température intermédiaire étant inférieure à la valeur seuil (Ts) de température du dispositif de dépollution (6) prédéterminée ; et
l'enclenchement du moteur thermique (2), avec injection de carburant, lorsque la température (T) du dispositif de dépollution (6) mesurée est supérieure ou égale à la valeur seuil (Tsi) de température intermédiaire, jusqu'à atteindre la valeur seuil (Ts) de température du dispositif de dépollution (6) prédéterminée.

4. Procédé de régénération selon la revendication 1 ou 2, **caractérisé en ce que** la mesure (300) de la quantité de particules fines dans le filtre à particules (7) comprend la mesure de la masse de particules fines dans le filtre à particules (7).

5. Procédé de régénération selon la revendication 4, **caractérisé en ce que** la masse de particules fines dans le filtre à particules (7) est calculée à partir du débit des gaz d'échappement mesurée dans le circuit d'échappement du moteur thermique (2) et de la pression différentielle mesurée aux bornes du filtre à particules (7).

6. Procédé de régénération selon l'une quelconque des revendications précédentes, **caractérisé en ce que** le moteur thermique (2) est un moteur à allumage commandé.

7. Procédé de régénération selon l'une quelconque des revendications précédentes, **caractérisé en ce que** le dispositif de dépollution (6) comprend un catalyseur trois voies (8).

## Patentansprüche

1. Verfahren zur Regeneration eines Partikelfilters (7) einer Reinigungsvorrichtung (6) für ein Hybridfahrzeug, das geeignet ist, in einer elektrischen, thermischen oder kombinierten Betriebsart betrieben zu werden, wobei das Verfahren die folgenden aufeinanderfolgenden Schritte umfasst:
Bestimmen (100) eines Schwellenwerts (Q_{S}) für die zulässige Feinpartikelmenge in dem Partikelfilter (7);
Bestimmen (200) eines Temperaturschwellenwerts (T_{S}) der Reinigungsvorrichtung (6), der zur Regeneration des Partikelfilters (7) durch Verbrennen der Feinpartikel erforderlich ist;
Berechnen (300) der Feinpartikelmenge (Q) in dem Partikelfilter;
Messen (400) der Temperatur (T) der Reinigungsvorrichtung (6), wenn die berechnete Feinpartikelmenge (Q) in dem Partikelfilter (7) größer als oder gleich dem vorherbestimmten Schwellenwert (Q_{S}) für die zulässige Menge ist;
Bestimmen (500) der Betriebsart des Fahrzeugs, wenn die gemessene Temperatur des Partikelfilters (7) niedriger als der vorherbestimmte Temperaturschwellenwert (T_{S}) der Reinigungsvorrichtung (6) ist; wobei das Verfahren **dadurch gekennzeichnet ist, dass** es ferner das Einschalten (600) von elektrischen Heizeinrichtungen (9) der Reinigungsvorrichtung (6) umfasst, wenn die bestimmte Betriebsart des Fahrzeugs rein elektrisch ist, bis die Temperatur der Reinigungsvorrichtung (6) höher als oder gleich dem vorherbestimmten Temperaturschwellenwert (T_{S}) ist, so dass die Regeneration des Partikelfilters ermöglicht wird, wobei die Heizeinrichtungen (9) abgeschaltet werden, wenn die Regeneration des Partikelfilters (7) abgeschlossen ist.

2. Verfahren zur Regeneration nach Anspruch 1, **dadurch gekennzeichnet, dass**, wenn die bestimmte Betriebsart des Fahrzeugs rein elektrisch ist, zusätzlich zu den eingeschalteten elektrischen Heizeinrichtungen (9) der Elektromotor (3) dazu ausgestaltet ist, den Verbrennungsmotor (2) ohne Kraftstoffeinspritzung drehanzutreiben (700), so dass ein Luftstrom bis zum Partikelfilter (7) gefördert wird, bis zum Ende der Regeneration des Partikelfilters (7).

3. Verfahren zur Regeneration nach Anspruch 1, **dadurch gekennzeichnet, dass** es umfasst:
das Bestimmen eines Zwischentemperaturschwellenwerts (T_{Si}) der Reinigungsvorrichtung (6), wobei der Zwischentemperaturschwellenwert (T_{Si}) geringer als der vorherbestimmte Temperaturschwellenwert (T_{S}) der Reinigungsvorrichtung (6) ist; und
das Einschalten des Verbrennungsmotors (2), mit Kraftstoffeinspritzung, wenn die gemessene Temperatur (T) der Reinigungsvorrichtung (6) höher als der oder gleich dem Zwischentemperaturschwellenwert (T_{Si}) ist, bis der vorherbestimmte Temperaturschwellenwert (T_{S}) der Reinigungsvorrichtung (6) erreicht ist.

4. Verfahren zur Regeneration nach Anspruch 1 oder 2, **dadurch gekennzeichnet, dass** das Messen (300) der Feinpartikelmenge in dem Partikelfilter (7) das Messen der Feinpartikelmasse in dem Partikelfilter (7) umfasst.

5. Verfahren zur Regeneration nach Anspruch 4, **dadurch gekennzeichnet, dass** die Feinpartikelmasse in dem Partikelfilter (7) anhand des in der Abgasanlage des Verbrennungsmotors gemessenen Volumenstroms der Abgase (2) und des an den Anschlussklemmen des Partikelfilters (7) gemessenen Differenzdrucks berechnet wird.

6. Verfahren zur Regeneration nach einem der vorhergehenden Ansprüche, **dadurch gekennzeichnet, dass** der Verbrennungsmotor (2) ein Ottomotor ist.

7. Verfahren zur Regeneration nach einem der vorhergehenden Ansprüche, **dadurch gekennzeichnet, dass** die Reinigungsvorrichtung (6) einen Drei-Wege-Katalysator (8) umfasst.

## Claims

1. Method for regenerating a particulate filter (7) of a pollution-control device (6) for a hybrid vehicle and able to operate in an electric, thermal or combined mode of operation, the method comprising the following successive steps:
determining (100) a threshold value (Q_{S}) for the acceptable quantity of fine particles in the particulate filter (7);
determining (200) a threshold value (T_{S}) for the temperature of the pollution-control device (6) that is necessary for the regeneration of the particulate filter (7) by burning off the fine particles;
calculating (300) the quantity (Q) of fine particles in the particulate filter;
measuring (400) the temperature (T) of the pollution-control device (6) when the calculated quantity (Q) of fine particles in the particulate filter (7) is greater than or equal to the predetermined acceptablequantity threshold value (Q_{S});
determining (500) the mode of operation of the vehicle when the measured temperature of the particulate filter (7) is less than the predetermined threshold value (T_{S}) for the temperature of the pollution-control device (6); the method being **characterized in that** it further comprises
engaging (600) electrical heating means (9) for electrically heating the pollution-control device (6) when the determined mode of operation of the vehicle is purely electrical, until the temperature of the pollution-control device (6) becomes greater than or equal to the predetermined temperature threshold value (T_{S}) so as to allow regeneration of the particulate filter, the heating means (9) being switched off when the regeneration of the particulate filter (7) is finished.

2. Regeneration method according to Claim 1, **characterized in that**, when the determined mode of operation of the vehicle is purely electrical, with the electrical heating means (9) also engaged, the electric motor (3) is configured to turn over (700) the combustion engine (2) without the injection of fuel, so that a stream of air is supplied to the particulate filter (7), until the end of regeneration of the particulate filter (7).

3. Regeneration method according to Claim 1, **characterized in that** it comprises:
determining an intermediate threshold value (T_{Si}) for the temperature of the pollution-control device (6), the intermediate temperature threshold value (T_{Si}) being less than the predetermined threshold value (T_{S}) for the temperature of the pollution-control device (6); and
engaging the combustion engine (2), with the injection of fuel, when the measured temperature (T) of the pollution-control device (6) is greater than or equal to the intermediate temperature threshold value (T_{Si}) until the predetermined threshold value (T_{S}) for the temperature of the pollution-control device (6) is reached.

4. Regeneration method according to Claim 1 or 2, **characterized in that** the measuring (300) of the quantity of fine particles in the particulate filter (7) includes measuring the mass of fine particles in the particulate filter (7).

5. Regeneration method according to Claim 4, **characterized in that** the mass of fine particles in the particulate filter (7) is calculated from the measured flow rate of exhaust gases in the exhaust circuit of the combustion engine (2) and from the differential pressure measured across the particulate filter (7).

6. Regeneration method according to any one of the preceding claims, **characterized in that** the combustion engine (2) is a controlled-ignition engine.

7. Regeneration method according to any one of the preceding claims, **characterized in that** the pollution-control device (6) comprises a three-way catalytic converter (8).
